# EUROPEAN PATENT APPLICATION

(11) **EP 4 462 215 A1**
(43) Date of publication of application: **13.11.2024**
(21) Application number: 22918163.1
(22) Date of filing: 13.07.2022
(51) Int. Cl.: G05D 1/02

(54) **SELF-MOVING DEVICE CONTROL METHOD AND APPARATUS, ELECTRONIC DEVICE, AND READABLE STORAGE MEDIUM**

(30) Priority: 04.01.2022 CN 202210004272
(71) Applicant: Beijing Roborock Innovation Technology Co., Ltd., Beijing 102206 (CN)
(72) Inventor: QI, Shengjun, Beijing 102206 (CN); WANG, Lei, Beijing 102206 (CN)
(74) Representative: Michalski Hüttermann & Partner Patentanwälte mbB
(86) International application number: PCT/CN2022/105544
(87) International publication number: WO 2023/130707

(57) **Abstract**

A self-moving device control method and apparatus, an electronic device, and a readable storage medium, which relate to the technical field of device control. When a self-moving device moves toward a fixed pile, the swing amplitude of the self-moving device is controlled by means of dynamically adjusting a linear speed or an angular speed, such that the self-moving device can accurately align itself with the pile, thereby improving the pile loading efficiency and the pile loading success rate, and the pile return stability is better. The method comprises: determining the position of a fixed pile during a pile return process, and moving toward the position of the fixed pile (101); when a pile return signal is detected, compiling statistics on distance information between the current position and the position of the fixed pile (102); and calculating a device moving speed which matches the distance information, and moving toward the position of the fixed pile according to the device moving speed (103), wherein the device moving speed comprises a linear speed or an angular speed of a self-moving device.

## Description

### CROSS-REFERENCE TO RELATED APPLICATION

This application claims priority to Chinese Patent Application No. 202210004272.3, filed on January 4, 2022, the content of which is incorporated herein as a part of this application by reference in its entirety.

### TECHNICAL FIELD

The present disclosure relates to the field of device control technologies, and in particular, to a method and an apparatus for controlling a self-moving device, an electronic device, and a readable storage medium.

### BACKGROUND

A self-moving device is a device that can move autonomously under the control of a program, for example, a sweeping self-walking device, a mopping self-walking device or a window-cleaning self-walking device. The self-moving device can receive a control instruction issued by a user, and work in response to the control instruction. The self-moving device automatically returns to a charging station for charging or maintenance (for example, dust collection or mop washing) after finishing the work, or after receiving a homing instruction from the user, or when a battery level is low.

In the related art, during a homing procedure of a self-moving device, when a distance to a station reaches a specific value, the self-moving device needs to be aligned with a position of the center of the station and move forwards or backwards to enter the station for charging, to ensure a one-time docking success rate. When an in-place switch on the station is triggered, it indicates that the self-moving device has returned to the station successfully, so that the self-moving device starts to be charged or another function is started. Therefore, how to accurately and stably trigger the in-place switch becomes an urgent problem to be solved.

### SUMMARY

According to a first aspect of the present disclosure, a method for controlling a self-moving device is provided. The method includes:
during a homing procedure, determining a position of a fixed station, and moving toward the position of the fixed station;
collecting distance information between a current position and the position of the fixed station; and
computing a device moving velocity matching the distance information and moving toward the position of the fixed station based on the device moving velocity, wherein the device moving velocity includes a linear velocity or an angular velocity of the self-moving device.

According to a second aspect of the present disclosure, an apparatus for controlling a self-moving device is provided. The apparatus includes:
a moving module configured to, during a homing procedure, determine a position of a fixed station, and move toward the position of the fixed station;
a collecting module configured to collect distance information between a current position and the position of the fixed station; and
a computing module configured to compute a device moving velocity matching the distance information,
wherein the moving module is further configured to move toward the position of the fixed station based on the device moving velocity, wherein the device moving velocity includes a linear velocity or an angular velocity of the self-moving device.

According to a third aspect of the present disclosure, an electronic device is provided. The electronic device includes a memory and a processor, wherein the memory stores a computer program, and when the computer program is executed by the processor, the steps of the method according to any embodiment of the first aspect are implemented.

According to a fourth aspect of the present disclosure, a readable storage medium is provided. The readable storage medium stores a computer program, wherein when the computer program is executed by a processor, the steps of the method according to any embodiment of the first aspect are implemented.

The foregoing description is merely an overview of the technical solutions of the present disclosure. For a better understanding of the technical solutions in the present disclosure such that they can be implemented according to the content of the specification, and in order to make the above and other objectives, features and advantages of the present disclosure more obvious and easier to understand, the following describes example embodiments of the present disclosure.

### BRIEF DESCRIPTION OF THE DRAWINGS

With reference to detailed descriptions of the following example implementations, various other advantages and benefits become clear to those of ordinary skills in the art. The accompanying drawings are merely for the purpose of illustrating the example implementations, and are not considered as a limitation to the present disclosure. In addition, in all the accompanying drawings, the same reference numerals denote the same components. In the accompanying drawings:
FIG. 1 is a schematic flowchart of a method for controlling a self-moving device according to an embodiment of the present disclosure;
FIG. 2 is a schematic flowchart of a method for controlling a self-moving device according to an embodiment of the present disclosure;
FIG. 3 is a schematic structural diagram of an apparatus for controlling a self-moving device according to an embodiment of the present disclosure;
FIG. 4 is a schematic structural diagram of an apparatus for controlling a self-moving device according to an embodiment of the present disclosure; and
FIG. 5 is a schematic structural diagram of an electronic device according to an embodiment of the present disclosure.

### DETAILED DESCRIPTION

Exemplary embodiments of the present disclosure are described below in further detail with reference to the accompanying drawings. Although the exemplary embodiments of the present disclosure are illustrated in the accompanying drawings, it should be understood that the present disclosure may be implemented in various forms without being limited to the embodiments described herein. On the contrary, these embodiments are provided to help more thoroughly understand the present disclosure and to fully convey the scope of the present disclosure to those skilled in the art.

The present disclosure provides a method and an apparatus for controlling a self-moving device, an electronic device, and a readable storage medium, which can resolve a problem that an existing self-moving device has poor homing stability and low docking success rate.

Because a backward homing procedure of a self-moving device relies on triggering of a rear in-place switch, many fixed stations such as cleaning stations or charging stations each are provided with a limiting groove used for fixing a tail of the self-moving device to ensure that the homing procedure is stable.

Due to the limiting groove, software of a self-moving device such as a sweeping robot or a mopping robot needs to be adapted correspondingly, that is, when approaching the limiting groove, a tail of the self-moving device performs swing tracking (that is, swings left or right to return to a station) based on gradually narrowed signals. If a linear velocity or an angular velocity of the self-moving device in traveling is too large, it is highly possible that the tail of the self-moving device misses the limiting groove, causing a failure of a homing operation. As a result, the self-moving device needs to get off the station and perform the homing operation again. Otherwise, if the linear velocity or angular velocity of the self-moving device in traveling is too small, the self-moving device needs to spend a lot of time searching for a position of the limiting groove, causing low docking efficiency. Therefore, to ensure that the tail of the self-moving device enters the limiting groove efficiently and accurately to trigger an in-place switch, an embodiment provides a method for controlling a self-moving device. The method includes: when performing a homing operation, determining a position of a fixed station and moving toward the position of the fixed station; collecting distance information between a current position and the position of the fixed station; computing a linear velocity or an angular velocity matching the distance information and using the velocity as a device moving velocity; and moving toward the position of the fixed station based on the device moving velocity, wherein the linear velocity or angular velocity of the self-moving device is reduced based on a distance to the fixed station. The self-moving device can be aligned with the station accurately by dynamically adjusting the linear velocity or the angular velocity to correspondingly control a moving velocity and a swing amplitude of the self-moving device, so that the docking efficiency and the docking success rate are improved, and the homing stability is high.

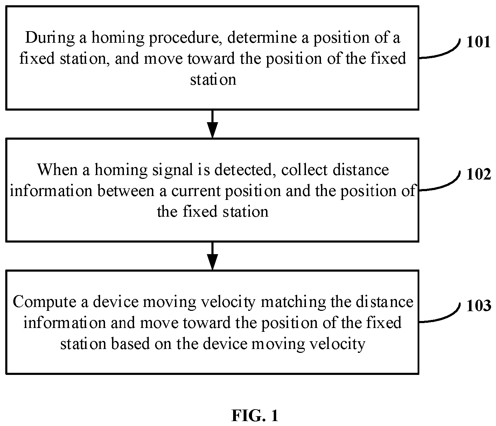

An embodiment of the present disclosure provides a method for controlling a self-moving device. As shown in FIG. 1, the method includes the following steps.

In 101, during a homing procedure, a position of a fixed station is determined, and movement toward the position of the fixed station is performed.

There is a data link between the self-moving device and a terminal held by a user. The user can issue a movement control instruction (for example, starting to perform sweeping or dock-to-charge) to the self-moving device by performing an operation on the terminal, so that hands of the user are freed. Therefore, in a normal working process, the self-moving device may receive a movement control instruction issued by the user based on the terminal and used for controlling the self-moving device to return to a fixed station for a docking operation such as charging or dock-to-clean. In this case, in response to the movement control instruction, the self-moving device determines the position of the fixed station and moves toward the position of the fixed station. It should be noted that after finishing a corresponding work, the self-moving device may automatically return to the fixed station for an operation such as charging, dust collection, or dock-to-clean. In this process, the self-moving device also needs to determine the position of the fixed station and then move toward the position of the fixed station. Therefore, a homing operation of the self-moving device may be an active behavior or a passive behavior, which is not specifically limited in the present disclosure.

The position of the fixed station is a current position of the fixed station. The fixed station may be a charging station used for charging the self-moving device; or, the fixed station may be a cleaning station used for washing and maintaining the self-moving device to provide the self-moving device with any one or any combination of functions of providing clean water for the self-moving device, collecting dust, cleaning a cleaning component on the self-moving device, and accommodating sewage of the self-moving device; or, the fixed station may be a station having both a charging function and a washing and maintaining function. The functions specifically provided by the fixed station are not limited in the present disclosure.

In 102, distance information between a current position and the position of the fixed station is collected when a homing signal is detected.

In this embodiment, when determining that the homing (return-to-station) operation needs to be started, the self-moving device may first move toward the fixed station based on a pre-stored position of the fixed station on a map. When the self-moving device detects that it is within a coverage range of a homing signal of the fixed station (that is, the homing signal is detected), it indicates that the self-moving device is already in a region where the fixed station is located. In this case, the self-moving device may determine an offset of the self-moving device with respect to a center position of the fixed station based on the homing signal, control itself to move to a position aiming at the center position of the fixed station (that is, move to a position in front of the fixed station) based on the offset, and determine a distance from the self-moving device to the fixed station by using a distance measuring apparatus.

Because the linear velocity or the angular velocity of the self-moving device in the present disclosure is reduced based on the distance from the fixed station, the linear velocity or the angular velocity is adjusted dynamically to control a swing amplitude of the self-moving device. Therefore, the self-moving device may continuously collect distance information between a current position and the position of the fixed station, to determine a device moving velocity based on the collected distance information. The distance information may be a straight-line distance between the current position and the position of the fixed station, and interference of an obstacle between the self-moving device and the fixed station on adjustment of the velocitie of the self-moving device can be avoided.

In 103, a device moving velocity matching the distance information is computed; and movement toward the position of the fixed station is performed based on the device moving velocity.

After determining the distance information, the self-moving device needs to compute the device moving velocity matching the distance information and move toward the position of the fixed station based on the device moving velocity. Specifically, the computed device moving velocity is a velocity corresponding to the distance information; and the device moving velocity decreases with the reduction of the distance information. In other words, a smaller distance between the self-moving device and the fixed station leads to a lower device moving velocity of the self-moving device to ensure accuracy for the self-moving device to be aligned with the station.

Further, the device moving velocity may include a linear velocity or an angular velocity of the self-moving device. Therefore, the swing amplitude of the self-moving device can be controlled by dynamically adjusting the linear velocity or the angular velocity. A smaller distance between the self-moving device and the fixed station leads to a smaller swing amplitude, thereby avoiding the self-moving device from swinging out of a limiting groove or avoiding signal loss.

According to the method provided in this embodiment of the present disclosure, the distance information between the current position and the position of the fixed station is collected; the linear velocity or the angular velocity matching the distance information is computed as the device moving velocity; movement toward the position of the fixed station is performed based on the device moving velocity; and the linear velocity or the angular velocity of the self-moving device is reduced based on the distance from the fixed station. The self-moving device can be aligned with the station accurately by dynamically adjusting the linear velocity or the angular velocity to control a swing amplitude of the self-moving device, so that the docking efficiency and the docking success rate are improved, and the homing stability is high.

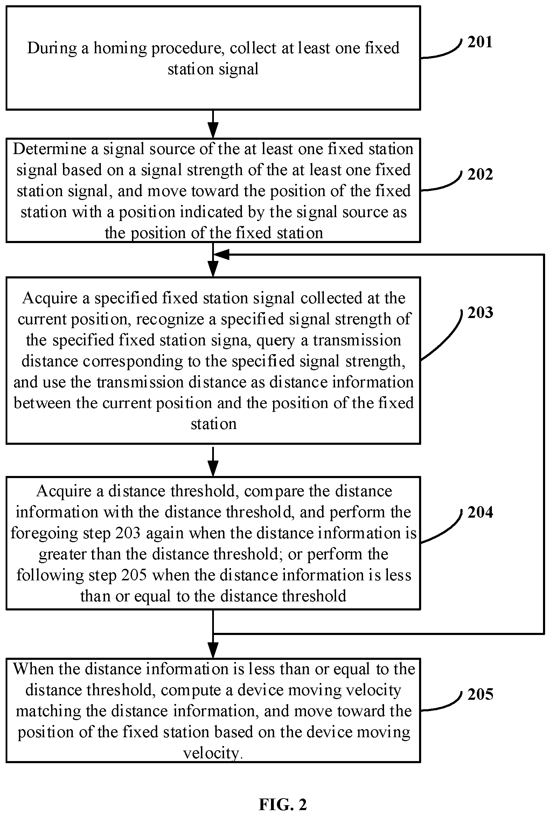

Further, in order to provide details and extension of a specific implementation of the foregoing embodiment, an embodiment of the present disclosure provides another method for controlling a self-moving device, to completely describe a specific implementation process of the embodiment. As shown in FIG. 2, the method includes the following steps.

In 201, at least one fixed station signal is collected in a homing procedure.

This embodiment of the present disclosure is described by using an example in which the self-moving device returns to a fixed station for a docking operation such as charging or dock-to-clean. In this case, the self-moving device needs to collect at least one fixed station signal within a preset collection range in a homing procedure, so that the self-moving device can subsequently determine a current position of the fixed station based on a strength of the fixed station signal, and then move toward this position. The at least one fixed station signal is a signal broadcast by the fixed station to the outside, and may be specifically a homing signal or the like. Because a range of a homing signal sent by the fixed station is limited, the self-moving device having collected the homing signal indicates the self-moving device having entered a region where the fixed station is located. Therefore, the self-moving device may move based on an indication of the fixed station signal.

In 202, a signal source of the at least one fixed station signal is determined based on a signal strength of the at least one fixed station signal; a position indicated by the signal source is used as a position of the fixed station; and movement toward the position of the fixed station is performed.

In this embodiment of the present disclosure, the self-moving device continuously receives the fixed station signal when moving into a coverage range of the fixed station signal. A smaller distance from the fixed station leads to a stronger strength of the fixed station signal, and a larger distance from the fixed station leads to a weaker strength of the fixed station signal. Therefore, after collecting the at least one fixed station signal, the self-moving device can determine the signal source of the at least one fixed station signal based on the signal strength of the at least one fixed station signal, use the position indicated by the signal source as the position of the fixed station, and move toward the position of the fixed station, where the position of the fixed station is a current position of the fixed station.

In 203, a specified fixed station signal collected at the current position is acquired; a specified signal strength of the specified fixed station signal is recognized; a transmission distance corresponding to the specified signal strength is queried; and the transmission distance is used as distance information between the current position and the position of the fixed station.

In this embodiment of the present disclosure, because a device moving velocity is mainly adjusted based on a distance between the self-moving device and the fixed station in the present disclosure, the self-moving device may acquire the specified fixed station signal collected at the current position, and recognize the specified signal strength of the specified fixed station signal. The specified signal strength indicates how far the current position of the self-moving device is from the fixed station, and there is an association between the signal strength and the distance, so that the self-moving device queries the transmission distance corresponding to the specified signal strength, uses the transmission distance as the distance information between the current position and the position of the fixed station, and subsequently performs velocity adjustment based on the distance information. Therefore, the docking efficiency is improved.

In 204, a distance threshold is acquired; the distance information is compared with the distance threshold; and the foregoing step 203 is performed again when the distance information is greater than the distance threshold; or the following step 205 is performed when the distance information is less than or equal to the distance threshold.

In this embodiment of the present disclosure, considering that velocity adjustment is of little significance when the self-moving device is far from the fixed station, only when the self-moving device is near the fixed station, a velocity can really decide whether the self-moving device can dock to the station accurately. Therefore, the distance threshold may be set. Based on the distance threshold, when the self-moving device starts to perform velocity adjustment may be controlled based on a distance from the fixed station. In other words, the distance threshold is acquired; and the distance information is compared with the distance threshold. Correspondingly, when the distance information is greater than the distance threshold, it indicates that the distance between the self-moving device and the fixed station is relatively large, and in this case, velocity adjustment is not required temporarily; distance information needs to be collected continuously in real time; and the distance information collected in real time is compared with the distance threshold. Therefore, the foregoing step 203 is performed again. When the distance information is less than or equal to the distance threshold, it indicates that the self-moving device is already near the fixed station, and in this case, velocity adjustment of the self-moving device needs to be started to implement accurate alignment to the station. Therefore, the following step 205 is performed.

In an actual applications, the distance threshold may be 20 cm, 30 cm, or the like. The distance threshold may be increased appropriately to improve the docking accuracy of the self-moving device. A specific value of the distance threshold is not limited in the present disclosure.

In 205, when the distance information is less than or equal to the distance threshold, a device moving velocity matching the distance information is computed; and movement toward the position of the fixed station is performed based on the device moving velocity.

In this embodiment of the present disclosure, when the distance information is less than or equal to the distance threshold, it indicates that the self-moving device is already near the fixed station, and in this case, velocity adjustment of the self-moving device needs to be started to implement accurate alignment to the station. Therefore, the device moving velocity matching the distance information needs to be computed; and movement toward the position of the fixed station is performed based on the device moving velocity. In an optional implementation, the device moving velocity may be computed in any one of the following three methods.

The first method includes: acquiring a current device velocity of the self-moving device, determining a preset velocity computation parameter, computing the distance information and the current device velocity based on the preset velocity computation parameter, and using an acquired computation result as the device moving velocity matching the distance information. The preset velocity computation parameter indicates a strategy for performing reduction adjustment on the current device velocity based on the distance information. In other words, the preset velocity computation parameter may be used to determine a value by which the angular velocity or the linear velocity of the self-moving device should be reduced based on current distance information, to ensure that the self-moving device can dock to the station precisely. In an actual application, an algorithm such as a linear function or an exponential function may be set, so that the device moving velocity is acquired by performing computation on the distance information and the current device velocity based on the preset velocity computation parameter according to the set algorithm.

The second method includes: determining a preset velocity adjustment formula, inputting the current device velocity and the distance information into the preset velocity adjustment formula for computation, and using an acquired computation result as the device moving velocity matching the distance information, where the preset velocity adjustment formula indicates a linear or non-linear adjustment relationship between the distance information and the current device velocity. Specifically, the preset velocity adjustment formula may be a linear formula, for example, Z = X - 0.5Y, where Z denotes a device moving velocity, X denotes a current device velocity, and Y denotes distance information. Therefore, a value of Z can be acquired by inputting values of X and Y into the formula. Movement to the fixed station is performed based on the value of Z. It should be noted that the foregoing formula is merely an example. In an actual application, the preset velocity adjustment formula may alternatively be a non-linear formula, such as an exponential function or a logarithmic function, according to which a current device velocity can be controlled to decrease with the reduction of the distance information. Specific content of the preset velocity adjustment formula is not limited in the present disclosure.

The third method includes: first, acquiring a preset association relationship, where the preset association relationship includes a plurality of sample distance intervals and sample device velocities each of which corresponds to a corresponding sample distance interval in the plurality of sample distance intervals, and the preset association relationship may be generated by testing the docking procedure of the self-moving device for a plurality of times, in other words, the plurality of sample distance intervals is specified in advance, the docking procedure of the self-moving device is performed for a plurality of times, and a value of an appropriate angular velocity or linear velocity corresponding to each of the plurality of sample distance intervals is separately determined and recorded in each docking procedure; and finally, for the appropriate angular velocities or linear velocities of each sample distance interval obtained in the plurality of docking procedures, computing an average value of the angular velocities or linear velocities corresponding to the sample distance interval, and using the average value as a sample device velocity corresponding to the sample distance interval. In this way, in an actual application, a target sample distance interval which the distance information hits may be queried from the plurality of sample distance intervals; a target sample device velocity corresponding to the target sample distance interval in the preset association relationship is determined; and the target sample device velocity is used as the device moving velocity matching the distance information. In the third method, an optimal device moving velocity corresponding to each distance may be determined according to a sample testing method. A given optimal device moving velocity is directly used to control movement of the self-moving device toward the fixed station. Real-time velocity computation is not required, so that a computational burden of the self-moving device is reduced.

In this way, in a process of performing the foregoing steps 201 to 205, the homing stability of the self-moving device can be ensured by dynamically adjusting a homing velocity, thereby ensuring the docking success rate. It should be noted that the foregoing steps 201 to 205 describe a procedure of dynamically adjusting a device moving velocity. However, in an actual applications, the self-moving device continuously collects distance information between a current position and the position of the fixed station in real time or periodically (for example, velocity adjustment is performed once every 2 other seconds), continuously computes a device moving velocity matching the distance information, and moves toward the position of the fixed station based on the device moving velocity, so that a tail of the self-moving device enters a limiting groove of the fixed station until the tail of the self-moving device triggers an in-place switch or receives a power-on signal; and then, charging or washing is started.

According to the method provided in the embodiments of the present disclosure, distance information from the fixed station is used in a homing procedure to compute a linear velocity or an angular velocity matching the distance information; the linear velocity or angular velocity is used as a device moving velocity; movement toward the position of the fixed station is performed based on the device moving velocity; and the linear velocity or angular velocity of the self-moving device is reduced based on a distance from the fixed station. The self-moving device can be aligned with the station accurately by dynamically adjusting the linear velocity or the angular velocity to control a swing amplitude of the self-moving device, so that the docking efficiency and the docking success rate are improved, and the homing stability is high.

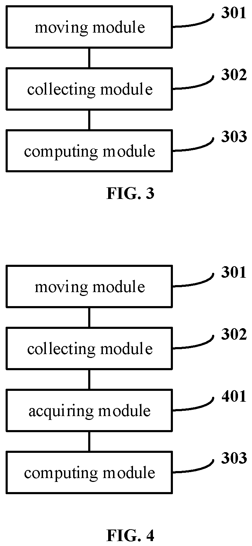

Further, as a specific implementation of the method shown in FIG. 1, an embodiment of the present disclosure provides an apparatus for controlling a self-moving device. As shown in FIG. 3, the apparatus includes: a moving module 301, a collecting module 302, and a computing module 303.

The moving module 301 is configured to, during a homing procedure, determine a position of a fixed station, and move toward the position of the fixed station.

The collecting module 302 is configured to collect distance information between a current position and the position of the fixed station.

The computing module 303 is configured to compute a device moving velocity matching the distance information.

The moving module 301 is further configured to move toward the position of the fixed station based on the device moving velocity, wherein the device moving velocity is a linear velocity or an angular velocity of the self-moving device.

In a specific application scenario, the moving module 301 is configured to: collect at least one fixed station signal; determine a signal source of the at least one fixed station signal based on a signal strength of the at least one fixed station signal; and use a position indicated by the signal source as the position of the fixed station, and move toward the position of the fixed station.

In a specific application scenario, the collecting module 302 is configured to: acquire a specified fixed station signal collected at the current position; recognize a specified signal strength of the specified fixed station signal; query a transmission distance corresponding to the specified signal strength; and use the transmission distance as the distance information between the current position and the position of the fixed station.

In a specific application scenario, as shown in FIG. 4, the apparatus further includes an acquiring module 401.

The acquiring module 401 is configured to: acquire a distance threshold, and compare the distance information with the distance threshold.

The collecting module 302 is further configured to: when the distance information is greater than the distance threshold, continuously collect distance information in real time, and compare the distance information collected in real time with the distance threshold.

The computing module 303 is further configured to: when the distance information is less than or equal to the distance threshold, compute the device moving velocity matching the distance information, and move toward the position of the fixed station based on the device moving velocity.

In a specific application scenario, the computing module 303 is configured to: acquire a current device velocity of the self-moving device, determine a preset velocity computation parameter, perform computation on the distance information and the current device velocity based on the preset velocity computation parameter, and use an acquired computation result as the device moving velocity matching the distance information, wherein the current device velocity is a current angular velocity or linear velocity of the self-moving device, and the preset velocity computation parameter indicates a strategy for performing reduction adjustment on the current device velocity based on the distance information; or, determine a preset velocity adjustment formula, input the current device velocity and the distance information into the preset velocity adjustment formula for computation, and use an acquired computation result as the device moving velocity matching the distance information, wherein the preset velocity adjustment formula indicates a linear or non-linear adjustment relationship between the distance information and the current device velocity.

In a specific application scenario, the computing module 303 is configured to: acquire a preset association relationship, wherein the preset association relationship includes a plurality of sample distance intervals and sample device velocities each of which corresponds to a corresponding sample distance interval in the plurality of sample distance intervals; query a target sample distance interval which the distance information hits from the plurality of sample distance intervals; determine a target sample device velocity corresponding to the target sample distance interval in the preset association relationship; and use the target sample device velocity as the device moving velocity matching the distance information.

In a specific application scenario, the collecting module 302 is further configured to: continuously collect distance information between a current position and the position of the fixed station in real time or periodically, continuously compute a device moving velocity matching the distance information, and move toward the position of the fixed station based on the device moving velocity until an in-place switch is triggered or a power-on signal is received.

According to the apparatus provided in the embodiments of the present disclosure, distance information from the fixed station is used during a homing procedure to compute a linear velocity or an angular velocity matching the distance information; the linear velocity or angular velocity is used as a device moving velocity; movement toward the position of the fixed station is performed based on the device moving velocity; and the linear velocity or angular velocity of the self-moving device is reduced based on a distance from the fixed station. The self-moving device can be aligned with the station accurately by dynamically adjusting the linear velocity or the angular velocity to control a swing amplitude of the self-moving device, so that the docking efficiency and the docking success rate are improved, and the homing stability is high.

It should be noted that for other corresponding descriptions of various functional units of the apparatus for controlling a self-moving device provided in this embodiment of the present disclosure, reference may be made to corresponding descriptions of FIG. 1 and FIG. 2. Details are not described herein again.

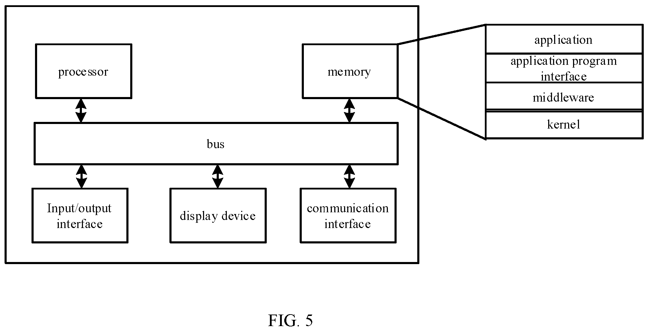

In an example embodiment, an electronic device is provided, as shown in FIG. 5. The electronic device includes a bus, a processor, a memory, and a communication interface, and may further include an input/output interface and a display device. The functional units may communicate with each other through the bus. The memory stores a computer program. The processor is configured to execute the program stored in the memory to implement the method for controlling the self-moving device in the foregoing embodiments.

A computer-readable storage medium storing a computer program is provided, wherein the steps of the method for controlling a self-moving device are implemented when the computer program is executed by a processor.

Through the foregoing descriptions of the implementations, those skilled in the art can clearly understand that the present disclosure can be implemented by means of hardware or by means of software plus a necessary general hardware platform. Based on such an understanding, the technical solutions of the present disclosure may be implemented in a form of a software product. The software product may be stored in a non-volatile storage medium (which may be a CD-ROM, a USB flash drive, a removable hard disk, or the like), and includes several instructions for instructing a computer device (which may be a personal computer, a server, or a network device) to perform the methods described for the implementation scenarios in the present disclosure.

Those skilled in the art may understand that the accompanying drawings are merely schematic diagrams of an example implementation scenario, and the modules or processes in the accompanying drawing are not necessarily needed for implementing the present disclosure.

Those skilled in the art may understand that the modules of the apparatus in the implementation scenario may be distributed in the apparatus in the implementation scenario according to the description of the implementation scenario, or may be changed accordingly and arranged in one or more apparatuses different from the apparatus in the implementation scenario. The modules in the foregoing implementation scenario may be combined into one module, or may be further disassembled into a plurality of sub-modules.

The foregoing serial numbers in the present disclosure are merely for description, and do not represent the preference of the implementation scenarios.

According to some embodiments of the present disclosure, determining the position of the fixed station during the homing procedure and moving toward the position of the fixed station include:
collecting at least one fixed station signal;
determining a signal source of the at least one fixed station signal based on a signal strength of the at least one fixed station signal; and
using a position indicated by the signal source as the position of the fixed station, and moving toward the position of the fixed station.

According to some embodiments of the present disclosure, the collecting the distance information between the current position and the position of the fixed station includes:
when the self-moving device moves into a range of a homing signal sent by a fixed station, measuring a distance from the self-moving device to the fixed station by using a distance measuring apparatus.

According to some embodiments of the present disclosure, collecting the distance information between the current position and the position of the fixed station includes:
acquiring a specified fixed station signal collected at the current position, and recognizing a specified signal strength of the specified fixed station signal; and
querying a transmission distance corresponding to the specified signal strength, and using the transmission distance as the distance information between the current position and the position of the fixed station.

According to some embodiments of the present disclosure, after collecting the distance information between the current position and the position of the fixed station, the method further includes:
acquiring a distance threshold, and comparing the distance information with the distance threshold; and
when the distance information is greater than the distance threshold, continuously collecting distance information in real time, and comparing the distance information collected in real time with the distance threshold; or
when the distance information is less than or equal to the distance threshold, computing the device moving velocity matching the distance information and moving toward the position of the fixed station based on the device moving velocity.

According to some embodiments of the present disclosure, the computing the device moving velocity matching the distance information includes:
acquiring a current device velocity of the self-moving device, determining a preset velocity computation parameter, performing computation on the distance information and the current device velocity based on the preset velocity computation parameter, and using an acquired computation result as the device moving velocity matching the distance information, wherein the current device velocity is a current angular velocity or linear velocity of the self-moving device, and the preset velocity computation parameter indicates a strategy for performing reduction adjustment on the current device velocity based on the distance information; or
determining a preset velocity adjustment formula, inputting the current device velocity and the distance information into the preset velocity adjustment formula for computation, and using an acquired computation result as the device moving velocity matching the distance information, wherein the preset velocity adjustment formula indicates a linear or non-linear adjustment relationship between the distance information and the current device velocity.

According to some embodiments of the present disclosure, the computing the device moving velocity matching the distance information includes:
acquiring a preset association relationship, wherein the preset association relationship includes a plurality of sample distance intervals and sample device velocities each of which corresponds to a corresponding sample distance interval in the plurality of sample distance intervals;
querying a target sample distance interval which the distance information hits from the plurality of sample distance intervals; determining a target sample device velocity corresponding to the target sample distance interval in the preset association relationship; and
using the target sample device velocity as the device moving velocity matching the distance information.

According to some embodiments of the present disclosure, the method further includes:
continuously collecting distance information between a current position and the position of the fixed station in real time or periodically; continuously computing a device moving velocity matching the distance information; and moving toward the position of the fixed station based on the device moving velocity until an in-place switch is triggered or a power-on signal is received.

According to some embodiments of the present disclosure, the moving module is configured to: collect at least one fixed station signal; determine a signal source of the at least one fixed station signal based on a signal strength of the at least one fixed station signal; use a position indicated by the signal source as the position of the fixed station; and move toward the position of the fixed station.

According to some embodiments of the present disclosure, the collecting module is configured to: acquire a specified fixed station signal collected at the current position; recognize a specified signal strength of the specified fixed station signal; query a transmission distance corresponding to the specified signal strength; and use the transmission distance as the distance information between the current position and the position of the fixed station.

According to some embodiments of the present disclosure, the apparatus further includes:
an acquiring module configured to: acquire a distance threshold, and compare the distance information with the distance threshold;
the collecting module is further configured to: when the distance information is greater than the distance threshold, continuously collect distance information in real time, and compare the distance information collected in real time with the distance threshold; and
the computing module is further configured to: when the distance information is less than or equal to the distance threshold, compute the device moving velocity matching the distance information, and move toward the position of the fixed station based on the device moving velocity.

According to some embodiments of the present disclosure, the computing module is configured to: acquire a current device velocity of the self-moving device, determine a preset velocity computation parameter, perform computation on the distance information and the current device velocity based on the preset velocity computation parameter, and use an acquired computation result as the device moving velocity matching the distance information, wherein the current device velocity is a current angular velocity or linear velocity of the self-moving device, and the preset velocity computation parameter indicates a strategy for performing reduction adjustment on the current device velocity based on the distance information; or determine a preset velocity adjustment formula, input the current device velocity and the distance information into the preset velocity adjustment formula for computation, and use an acquired computation result as the device moving velocity matching the distance information, wherein the preset velocity adjustment formula indicates a linear or non-linear adjustment relationship between the distance information and the current device velocity.

According to some embodiments of the present disclosure, the computing module is configured to: acquire a preset association relationship, wherein the preset association relationship includes a plurality of sample distance intervals and sample device velocities each of which corresponds to a corresponding sample distance interval in the plurality of sample distance intervals; query a target sample distance interval which the distance information hits from the plurality of sample distance intervals; determine a target sample device velocity corresponding to the target sample distance interval in the preset association relationship; and use the target sample device velocity as the device moving velocity matching the distance information.

According to some embodiments of the present disclosure, the collecting module is further configured to: continuously collect distance information between a current position and the position of the fixed station in real time or periodically, continuously compute a device moving velocity matching the distance information, and move toward the position of the fixed station based on the device moving velocity until an in-place switch is triggered or a power-on signal is received.

Based on the foregoing technical solutions, the present disclosure provides a method and an apparatus for controlling a self-moving device, an electronic device, and a readable storage medium. According to the present disclosure, when moving toward a fixed station, a self-moving device can be aligned with the station accurately by dynamically adjusting a linear velocity or an angular velocity to control a swing amplitude of the self-moving device, so that the docking efficiency and the docking success rate are improved, and the homing stability is high.

The above disclosed are merely several example implementation scenarios of the present disclosure. However, the present disclosure is not limited thereto. Any changes that can be conceived by those skilled in the art should fall within the protection scope of the present disclosure.

## Claims

1. A method for controlling a self-moving device, comprising:
during a homing procedure, determining a position of a fixed station, and moving toward the position of the fixed station;
collecting distance information between a current position and the position of the fixed station; and
computing a device moving velocity matching the distance information and moving toward the position of the fixed station based on the device moving velocity, wherein the device moving velocity comprises a linear velocity or an angular velocity of the self-moving device.

2. The method according to claim 1, wherein determining the position of the fixed station during the homing procedure and moving toward the position of the fixed station comprises:
collecting at least one fixed station signal;
determining a signal source of the at least one fixed station signal based on a signal strength of the at least one fixed station signal; and
using a position indicated by the signal source as the position of the fixed station, and moving toward the position of the fixed station.

3. The method according to claim 1 or 2, wherein collecting the distance information between the current position and the position of the fixed station comprises:
when the self-moving device moves into a range of a homing signal sent by the fixed station, measuring a distance from the self-moving device to the fixed station by using a distance measuring apparatus.

4. The method according to claim 1 or 2, wherein collecting distance information between the current position and the position of the fixed station comprises:
acquiring a specified fixed station signal collected at the current position, and recognizing a specified signal strength of the specified fixed station signal; and
querying a transmission distance corresponding to the specified signal strength, and using the transmission distance as the distance information between the current position and the position of the fixed station.

5. The method according to claim 1 or 2, wherein after collecting the distance information between the current position and the position of the fixed station, the method further comprises:
acquiring a distance threshold, and comparing the distance information with the distance threshold; and
when the distance information is greater than the distance threshold, continuously collecting distance information in real time, and comparing the distance information collected in real time with the distance threshold; or
when the distance information is less than or equal to the distance threshold, computing the device moving velocity matching the distance information and moving toward the position of the fixed station based on the device moving velocity.

6. The method according to any one of claims 1 to 5, wherein computing the device moving velocity matching the distance information comprises:
acquiring a current device velocity of the self-moving device, determining a preset velocity computation parameter, performing computation on the distance information and the current device velocity based on the preset velocity computation parameter, and using an acquired computation result as the device moving velocity matching the distance information, wherein the current device velocity is a current angular velocity or a linear velocity of the self-moving device, and the preset velocity computation parameter indicates a strategy for performing reduction adjustment on the current device velocity based on the distance information; or
determining a preset velocity adjustment formula, inputting the current device velocity and the distance information into the preset velocity adjustment formula for computation, and using an acquired computation result as the device moving velocity matching the distance information, wherein the preset velocity adjustment formula indicates a linear or non-linear adjustment relationship between the distance information and the current device velocity.

7. The method according to any one of claims 1 to 5, wherein computing the device moving velocity matching the distance information comprises:
acquiring a preset association relationship, wherein the preset association relationship comprises a plurality of sample distance intervals and sample device velocities each of which corresponds to a corresponding sample distance interval in the plurality of sample distance intervals;
querying a target sample distance interval which the distance information hits from the plurality of sample distance intervals, and determining a target sample device velocity corresponding to the target sample distance interval in the preset association relationship; and
using the target sample device velocity as the device moving velocity matching the distance information.

8. The method according to any one of claims 1 to 7, wherein the method further comprises:
continuously collecting distance information between a current position and the position of the fixed station in real time or periodically; continuously computing a device moving velocity matching the distance information; and moving toward the position of the fixed station based on the device moving velocity until an in-place switch is triggered or a power-on signal is received.

9. An apparatus for controlling a self-moving device, comprising:
a moving module configured to, during a homing procedure, determine a position of a fixed station, and move toward the position of the fixed station;
a collecting module configured to collect distance information between a current position and the position of the fixed station; and
a computing module configured to compute a device moving velocity matching the distance information,
wherein the moving module is further configured to move toward the position of the fixed station based on the device moving velocity, wherein the device moving velocity comprises a linear velocity or an angular velocity of the self-moving device.

10. The apparatus according to claim 9, wherein the moving module is configured to: collect at least one fixed station signal; determine a signal source of the at least one fixed station signal based on a signal strength of the at least one fixed station signal; and use a position indicated by the signal source as the position of the fixed station, and move toward the position of the fixed station.

11. The apparatus according to claim 9 or 10, wherein the collecting module is configured to: acquire a specified fixed station signal collected at the current position, and recognize a specified signal strength of the specified fixed station signal; and query a transmission distance corresponding to the specified signal strength, and use the transmission distance as the distance information between the current position and the position of the fixed station.

12. The apparatus according to claim 9 or 10, wherein the apparatus further comprises:
an acquiring module configured to: acquire a distance threshold, and compare the distance information with the distance threshold;
wherein the collecting module is further configured to: when the distance information is greater than the distance threshold, continuously collect distance information in real time, and compare the distance information collected in real time with the distance threshold; and
wherein the computing module is further configured to: when the distance information is less than or equal to the distance threshold, compute the device moving velocity matching the distance information, and move toward the position of the fixed station based on the device moving velocity.

13. The apparatus according to any one of claims 9 to 12, wherein the computing module is configured to: acquire a current device velocity of the self-moving device, determine a preset velocity computation parameter, perform computation on the distance information and the current device velocity based on the preset velocity computation parameter, and use an acquired computation result as the device moving velocity matching the distance information, wherein the current device velocity is a current angular velocity or a linear velocity of the self-moving device, and the preset velocity computation parameter indicates a strategy for performing reduction adjustment on the current device velocity based on the distance information; or, determine a preset velocity adjustment formula, input the current device velocity and the distance information into the preset velocity adjustment formula for computation, and use an acquired computation result as the device moving velocity matching the distance information, wherein the preset velocity adjustment formula indicates a linear or non-linear adjustment relationship between the distance information and the current device velocity.

14. The apparatus according to any one of claims 9 to 12, wherein the computing module is configured to: acquire a preset association relationship, wherein the preset association relationship comprises a plurality of sample distance intervals and sample device velocities each of which corresponds to a corresponding sample distance interval in the plurality of sample distance intervals; query a target sample distance interval which the distance information hits from the plurality of sample distance intervals, and determine a target sample device velocity corresponding to the target sample distance interval in the preset association relationship; and use the target sample device velocity as the device moving velocity matching the distance information.

15. The apparatus according to any one of claims 9 to 14, wherein the collecting module is further configured to: continuously collect distance information between a current position and the position of the fixed station in real time or periodically, continuously compute a device moving velocity matching the distance information, and move toward the position of the fixed station based on the device moving velocity until an in-place switch is triggered or a power-on signal is received.

16. An electronic device, comprising a memory and a processor, wherein the memory stores a computer program, and when the computer program is executed by the processor, the steps of the method according to any one of claims 1 to 8 are implemented.

17. A readable storage medium storing a computer program, wherein when the computer program is executed by a processor, the steps of the method according to any one of claims 1 to 8 are implemented.
